# FASCICULE DE BREVET EUROPEEN

(11) **EP 0 598 875 B1**
(45) Date de publication et mention de la délivrance du brevet: **25.10.1995**
(21) Numéro de dépôt: 93912530.8
(22) Date de dépôt: 22.06.1993
(51) Int. Cl.: B60S 1/08

(54) **DISPOSITIF DE NETTOYAGE A COMMANDE AUTOMATIQUE, NOTAMMENT POUR PARE-BRISE DE VEHICULE AUTOMOBILE**
AUTOMATISCHE REINIGUNGSVORRICHTUNG, INSBESONDERE FÜR EINE KRAFTFAHRZEUGWINDSCHUTZSCHEIBE
AUTOMATICALLY CONTROLLED CLEANING DEVICE, IN PARTICULAR FOR A MOTOR VEHICLE WINDSCREEN

(30) Priorité: 23.06.1992 FR 9207773
(43) Date de publication de la demande: 01.06.1994
(73) Titulaire: SMH MANAGEMENT SERVICES AG, CH-2501 Bienne (CH)
(72) Inventeur: ITTAH, Benjamin, CH-1224 Chêne-Bougeries (CH); BECHET, Louis, F-74140 Sciez (FR); ARDITI, Marcel, CH-1203 Genève (CH)
(74) Mandataire: de Montmollin, Henri
(86) Numéro de dépôt international: CH9300160
(87) Numéro de publication internationale: WO9400319

(56) Documents cités:
- EP-A- 0 403 337
- EP-A- 0 512 653
- DE-A- 3 542 032
- DE-A- 4 033 975
- SOVIET INVENTIONS ILLUSTRATED Section EI, Week E09, 14 avril 1982 Derwent Publications Ltd., London, GB; Class X22, AN C4732 E/09 & SU-A-833 463 (ALEKSANDROV VV) 6 juin 1981

## Description

La présente invention concerne, de manière générale, un dispositif de nettoyage à commande automatique destiné à l'élimination de la surface d'une vitre, par exemple un pare-brise de véhicule, de corps étrangers humides, tels que la boue, la pluie ou la neige, qui gênent la visibilité et elle se rapporte plus particulièrement à un dispositif de ce type utilisant des ondes élastiques pour détecter la présence de ces corps étrangers.

On connaît différents moyens pour détecter la présence de corps étrangers à la surface d'une vitre. Le plus souvent, on tire parti du fait que la transmission d'une onde (onde optique, élastique ou autre) dans le matériau de la vitre peut se trouver passablement affectée par une modification du milieu dans lequel la vitre se trouve. Ainsi, dans le cas du pare-brise d'un véhicule automobile, la transmission d'une onde lumineuse par réflexion multiple dans l'épaisseur du verre peut être plus ou moins atténuée en fonction de l'état de surface d'une des parois du pare-brise.

Le brevet francais 2 648 096 propose un système de nettoyage automatique utilisant des moyens de détection optiques faisant application de ce principe d'atténuation.

Ce dernier principe reste encore valable dans le cas d'une onde élastique et des systèmes de détection à ultrasons ont souvent été proposés.

Le brevet allemand DE 40 33 975, par exemple, détecte les variations d'amplitude d'un signal ultrasonore reçu sur un détecteur disposé à une certaine distance de l'émetteur.

Un principe analogue de détection de variation d'amplitude est utilisé dans la demande de brevet français 91 05784 dans laquelle les fonctions d'émission et de réception sont réalisées par un seul et même transducteur.

Dans la demande de brevet japonais JP 59-192 651, c'est l'existence d'impulsions supplémentaires, dans le signal ultrasonore reçu par le détecteur, qui permet de déduire la présence de corps étrangers. Ces impulsions supplémentaires viennent du fait que la présence de corps étrangers engendrent des chemins de transmission de l'onde supplémentaires.

Les dispositifs connus cités plus haut utilisant un système de détection à ultrasons, présentent néanmoins l'inconvénient de fonctionner à une relativement haute fréquence, typiquement de l'ordre de 1 à 100 MHz; et que cette fréquence soit émise en onde continue ou sous forme d'impulsions, les circuits de traitement doivent également pouvoir travailler à haute fréquence. Cette condition interdit d'envisager, pour ces applications, l'utilisation de circuits peu coûteux, tels ceux réalisés à l'aide de technologies plus lentes, par exemple, les technologies MOS ou CMOS. Or, on conçoit aisément qu'un coût de réalisation élevé constitue un frein à la généralisation de l'utilisation de tels dispositifs de nettoyage à commande automatique, lesquels représentent cependant pour l'utilisateur un avantage indéniable, tant sur le plan du confort que sur celui de la sécurité.

Aussi un but de l'invention est de réaliser un dispositif de nettoyage à commande automatique destiné à l'élimination de corps étrangers de la surface d'une vitre utilisant un détecteur à ultrasons et ne présentant pas les inconvénients mentionnés ci-dessus.

Un autre but de l'invention est de réaliser un dispositif de nettoyage dont le détecteur fonctionne à une fréquence relativement basse.

Encore un autre but de l'invention est de réaliser un dispositif de nettoyage dont le coût de réalisation est plus faible que celui des systèmes de l'art antérieur.

Ces buts peuvent être réalisés grâce au fait que l'on s'est aperçu que, pour une fréquence et une distance entre l'émetteur et le récepteur données, le déphasage entre le signal émis par l'émetteur et le signal reçu par le récepteur pouvait varier notablement en fonction de la présence de corps étrangers à la surface d'une vitre. Ce phénomène s'observe pour une fréquence du signal émis de l'ordre d'une centaine de kiloHerz.

Les caractéristiques de l'invention sont définies dans les revendications annexées.

D'autres buts, caractéristiques et avantages de la présente invention apparaîtront plus clairement à la lecture de la description suivante d'un mode de réalisation, ladite description étant faite à titre purement illustratif et en relation avec les dessins joints dans lesquels:
- la figure 1 montre un schéma de principe du dispositif de l'invention;
- la figure 2 est une coupe partielle montrant le montage des transducteurs piézoélectriques sur le pare-brise;
- la figure 3 montre une pastille piézoélectrique munie de ses électrodes; et
- la figure 4 montre un schéma bloc du circuit de commande de moteur d'essuie-glace.

La description de la présente invention qui suit, va être décrite dans le cadre d'une application à l'élimination de corps étrangers humides tels que la boue, la pluie, la neige etc. d'un pare-brise d'un véhicule automobile.

Toutefois, il va de soi que l'invention n'est nullement limitée à cette application et qu'elle pourra être avantageusement utilisée dans le cadre de toute autre application de nettoyage d'une plaque mince faite dans un matériau capable de transmettre un signal ultrasonore.

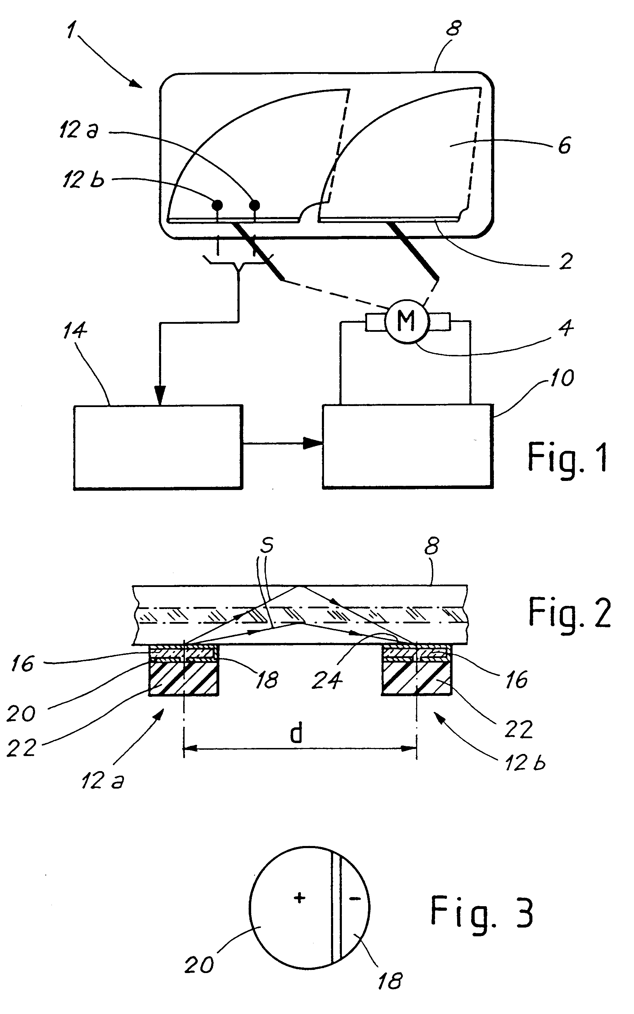

En se référant à la figure 1 on voit un dispositif classique de commande d'essuie-glace désigné par la référence générale 1. Le dispositif 1 comprend des essuie-glace 2 couplés mécaniquement à un moteur 4 de sorte qu'ils balaient, lorsqu'ils sont actionnés, une zone 6, en forme de secteur circulaire, d'un pare-brise 8 monocouche. Des moyens d'actionnement 10, connectés au moteur 4, permettent d'effectuer la mise en route et/ou l'arrêt de ce moteur.

La commande automatique des essuie-glace selon l'invention est réalisée à l'aide de moyens de détection à ultrasons 12a et 12b placés contre le pare-brise en regard de la zone 6 et d'un circuit de commande 14 dont la fonction et la structure sont décrites en relation avec les figures 2 à 4.

En se référant maintenant aux figures 2 et 3 on voit respectivement, le positionnement des transducteurs 12a et 12b sur le pare-brise 8 ainsi que la forme des électrodes des transducteurs 12a, 12b.

Les transducteurs, qu'ils soient utilisés en émission ou en réception, sont identiques. Les transducteurs 12a, 12b comprennent un élément piézoélectrique 16, des électrodes 18, 20 ainsi que des moyens d'amortissement 22. Ils sont fixés sur la face intérieure du pare-brise 8 au moyen d'un film mince de colle 24 représenté par un trait à la figure 2. Les deux transducteurs 12a, 12b sont distants d'une distance d dont la détermination de la valeur sera expliquée plus loin.

Les transducteurs 12a, 12b peuvent être réalisés sous forme de pastilles d'un matériau piézoélectrique, tel que PZT, niobate de lithium, titanate de plomb, etc. Chaque transducteur 12a, 12b comprend une première électrode 18 (par exemple négative) qui s'étend, d'une part, sur la totalité de sa face qui est en contact avec le pare-brise 8, et d'autre part, sur une partie de la face opposée (figure 3). Ces transducteurs 12a, 12b comprennent chacun une deuxième électrode 20 (positive) isolée de la première électrode 18 et qui recouvre la partie de ladite face opposée non recouverte par la première électrode 18.

Les électrodes sont réalisées par des moyens connus, tels que le dépôt et la gravure chimique d'un métal ou d'un alliage métallique (Nickel, Argent, etc.). Les moyens d'amortissement 22 sont montés, de manière appropriée, sur les éléments piézoélectriques 16. Le rôle de ces moyens d'amortissement 22 est, d'une part, de confiner l'énergie mécanique de vibration dans la direction voulue (c'est-à-dire vers le pare-brise) et, d'autre part, d'atténuer les réverbérations parasites du signal transmis et/ou reçu par les transducteurs.

On peut trouver des informations sur la constitution et le montage de ces moyens d'amortissement 22, respectivement, dans l'article de Y. Bar-Cohen et al. paru dans la revue J. Acoust. Am. Vol. 75, No. 5, May 1984 aux pages 1629 et suivantes et dans la demande de brevet français 91 05784.

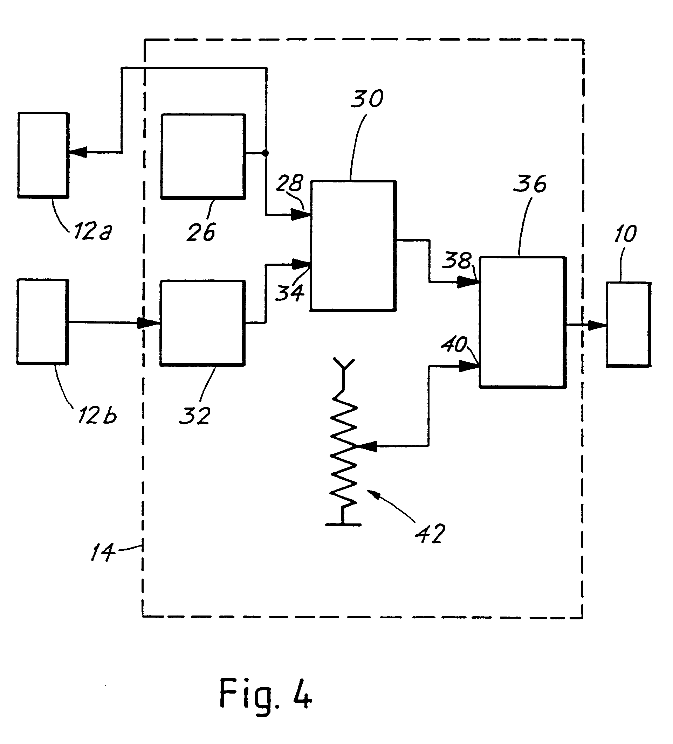

La figure 4 montre le schéma bloc du circuit de commande 14 du dispositif de nettoyage de l'invention. Le circuit 14 comprend un générateur 26 de signal périodique, ayant la fréquence voulue (voir ci-après). Le générateur 26 est couplé d'une part, au transducteur d'émission 12a et d'autre part, à l'entrée 28 d'un circuit de détection de phase 30. Un amplificateur 32 qui reçoit, en entrée, le signal fourni par le transducteur 12b fournit un signal amplifié à une deuxième entrée 34 du circuit de détection de phase 30. Un circuit comparateur 36 recoit sur une première entrée 38 le signal de sortie dudit circuit de détection de phase 30. Sa deuxième entrée 40 est reliée à des moyens 42 de fixation d'une valeur de seuil. La sortie du circuit comparateur commande les moyens d'actionnement 10 du moteur 4 d'essuie-glace.

Le principe de fonctionnement du dispositif est le suivant. Ainsi qu'il a été dit plus haut, il existe, pour un pare-brise donné, une corrélation entre la fréquence (f) du signal et la distance (d) entre l'émetteur et le récepteur pour lequel le déphasage entre le signal émis et le signal reçu varie considérablement en fonction de l'état de surface du pare-brise. La fréquence est de l'ordre de 100 à 150 kiloHerz et la distance d de l'ordre de 10 à 20 millimètres. On notera que les dimensions ont fortement été exagérées au dessin pour des raison de clarté. Les valeurs exactes de la fréquence et de la distance dépendent de la constitution (matériau, monocouche ou multicouche, etc.) et de l'épaisseur du pare-brise et, également, de celles des transducteurs. La détermination du couple (f)/(d) peut se faire de manière empirique. Pour cela, il est nécessaire de disposer d'un générateur de fréquence variable, couvrant la gamme de 100 à 150 kiloHerz, et de moyens d'ajustement de la distance d. Ce déphasage est celui qui existe entre l'onde émise et l'onde résultante recueillie par le récepteur.

Les ondes qui se propagent entre l'émetteur et le récepteur sont sousmises à de multiples réflexions et parcourent différents trajets dont certaines ont été représentés par S à la figure 2. Certaines de ces ondes sont influencées par la présence d'eau, par exemple en une modification d'amplitude. Certaines autres ondes ne sont pas influencées, comme par exemple l'onde directe ou encore l'onde qui se propage dans la feuille intérieure du pare-brise feuilleté.

Le signal reçu est déterminé par la somme vectorielle des différentes ondes acoustiques qui se propagent entre l'émetteur et le récepteur.

Le réglage consiste à choisir un couple fréquence distance qui rend prépondérante, dans la somme vectorielle, la participation des ondes sensibles à la présence d'eau à la surface extérieure du pare-brise.

Si l'on se réfère au schéma de la figure 4, le générateur 26 émet un signal électrique continu à la fréquence voulue qui est appliqué aux électrodes du transducteur 12a. Ce dernier engendre une vibration élastique de même fréquence qui est transmise au pare-brise sur lequel il est fixé. Le transducteur 12b transforme la vibration reçue en un signal électrique qui, après amplification, est appliqué au détecteur de phase 30. Ce détecteur de phase fournit en sortie un signal représentatif du déphasage existant entre le signal émis par le générateur 26 et le signal issu de l'amplificateur 32. Si la valeur du déphasage dépasse une valeur de seuil déterminée par les moyens 42 (la valeur de seuil peut être fixée de manière empirique après la détermination de la fréquence et de la distance d), la sortie du comparateur 36 change d'état logique et commande l'actionneur 10 du moteur d'essuie-glace. Il est bien évident qu'au lieu d'une commande "tout ou rien" du moteur d'essuie-glace, on pourrait faire dépendre la vitesse de ce moteur du signal représentatif du déphasage, qui est de nature analogique. Ainsi, la vitesse du moteur serait en relation directe avec le taux d'impuretés (pluie, neige, boue, etc.) à la surface du pare-brise.

Bien que la présente invention ait été décrite dans le cadre d'un exemple de réalisation particulier, il est clair cependant qu'elle n'est pas limitée audit exemple et qu'elle est susceptible de modifications ou variantes sans sortir de son domaine.

## Revendications

1. Dispositif de nettoyage à commande automatique destiné à l'élimination de corps étrangers humides à la surface d'une vitre (8) et comprenant des moyens de nettoyage (2,4) de ladite surface, des moyens d'actionnement (10) desdits moyens de nettoyage, des moyens pour détecter la présence des corps étrangers à l'aide d'un émetteur (12a) et d'un récepteur (12b) à ultrasons disposés sur la vitre et pour fournir un signal de détection représentatif de cette présence et des moyens de commande (14) pour commander, en réponse au signal de détection, lesdits moyens d'actionnement, caractérisé en ce que la fréquence (f) du signal émis par l'émetteur et la distance (d) existant entre l'émetteur et le récepteur sont choisies de telle sorte que le déphasage entre ledit signal émis et le signal reçu par le récepteur est maximum en présence de corps étrangers et en ce que lesdits moyens de commande comportent un circuit de mesure dudit déphasage.

2. Dispositif de nettoyage à commande automatique selon la revendication 1, caractérisé en ce que ledit signal émis par l'émetteur est un signal en onde continue.

3. Dispositif de nettoyage à commande automatique selon la revendication 1 ou la revendication 2, caractérisé en ce que la fréquence du signal émis est comprise entre 100 et 150 kiloHerz et en ce que la distance entre l'émetteur et le récepteur est comprise entre 10 et 20 millimètres.

4. Dispositif de nettoyage à commande automatique selon l'une quelconque des revendications 1 à 3, caractérisé en ce que ledit émetteur et le dit récepteur sont des transducteurs piézoélectriques.

5. Dispositif de nettoyage à commande automatique selon l'une quelconque des revendications 1 à 4, caractérisé en ce que lesdits moyens de commande comprennent :
- un générateur de signal électrique (26) à la fréquence f dont la sortie est appliquée audit émetteur;
- un amplificateur (32) pour amplifier le signal fourni par ledit récepteur;
- un circuit (30) de mesure du déphasage entre le signal fourni par ledit générateur et le signal fourni par ledit amplificateur; et
- un circuit comparateur (36) pour comparer la valeur dudit déphasage à une valeur de seuil (42) et commander lesdits moyens d'actionnement (10) lorsque ladite valeur de déphasage est supérieure à ladite valeur de seuil.

## Claims

1. Automatically controlled cleaning arrangement intended for the elimination of moist foreign bodies from a glass surface (8) and comprising cleaning means (2, 4) for said surface, activating means (10) for said cleaning means, means for detecting the presence of foreign bodies with the help of an ultrasonic transmitter (12a) and receiver (12b) arranged on the glass in order to furnish a detection signal representing such presence and control means (14) for operating said activating means in response to the detection signal, characterized in that the frequency (f) of the signal emitted by the transmitter and the distance (d) existing between the transmitter and the receiver are selected in a manner such that the phase difference between said emitted signal and the signal received by the receiver is a maximum in the presence of foreign bodies and in that said control means includes a circuit for measuring said phase difference.

2. Automatically controlled cleaning arrangement according to claim 1, characterized in that said signal emitted by the transmitter is a continuous wave signal.

3. Automatically controlled cleaning arrangement according to claim 1 or claim 2, characterized in that the frequency of the emitted signal is comprised between 100 and 150 kiloHerz and in that the distance between the transmitter and the receiver is comprised between 10 and 20 millimeters.

4. Automatically controlled cleaning arrangement according to any one of claims 1 to 3, characterized in that said transmitter and said receiver are piezoelectric transducers.

5. Automatically controlled cleaning arrangement according to any one of claims 1 to 4, characterized in that said control means comprise:
- a generator (26) of electrical signals at the frequency f, the output of which is applied to said transmitter;
- an amplifier (32) for amplifying the signal furnished by said receiver;
- a circuit (30) for measuring the phase difference between the signal furnished by said generator and the signal furnished by said amplifier; and
- a comparator circuit (36) for comparing the value of said phase difference with a threshold value (42) and operating said activating means (10) whenever said phase difference is greater than said threshold value.

## Patentansprüche

1. Automatisch gesteuerte Reinigungsvorrichtung, bestimmt zum Eliminieren von feuchten Fremdkörpern von der Oberfläche eines Glases (8) und umfassend Reinigungsmittel (2, 4) für die Oberfläche, Betätigungsmittel (10) der Reinigungsmittel, Mittel zum Erkennen des Vorhandenseins von Fremdkörpern mit Hilfe eines Ultraschallsenders (12a) und -empfängers (12b), angeordnet auf dem Glas und ausgebildet zum Liefern eines Erkennungssignals, das repräsentativ für dieses Vorhandensein ist, und Steuermittel (14) zum Steuern der Betätigungsmittel in Reaktion auf das Erkennungssignal, dadurch gekennzeichnet, daß die Frequenz (f) des von dem Sender ausgesandten Signals und die Distanz (d) zwischen dem Sender und dem Empfänger derart gewählt sind, daß die Phasenverschiebung zwischen dem ausgesandten und dem vom Empfänger empfangenen Signal maximal ist bei Vorhandensein von Fremdkörpern und daß die Steuermittel einen Schaltkreis für das Messen dieser Phasenverschiebung umfassen.

2. Automatisch gesteuerte Reinigungsvorrichtung nach Anspruch 1, dadurch gekennzeichnet, daß das von dem Sender ausgesandte Signal ein Signal mit ständiger Welle ist.

3. Automatisch gesteuerte Reinigungsvorrichtung nach Anspruch 1 oder Anspruch 2, dadurch gekennzeichnet, daß die Frequenz des ausgesandten Signals zwischen 100 und 150 kHz liegt und daß die Distanz zwischen dem Sender und dem Empfänger zwischen 10 und 20 mm liegt.

4. Automatisch gesteuerte Reinigungsvorrichtung nach einem der Ansprüche 1 bis 3, dadurch gekennzeichnet, daß der Sender und der Empfänger piezoelektrische Wandler sind.

5. Automatisch gesteuerte Reinigungsvorrichtung nach einem der Ansprüche 1 bis 4, dadurch gekennzeichnet, daß die Steuermittel umfassen:
- einen Generator eines elektrischen Signals (26) mit der Frequenz (f), dessen Ausgang an dem Sender anliegt;
- einen Verstärker (32) für die Verstärkung des von dem Empfänger gelieferten Signals;
- einen Schaltkreis (30) zur Messung der Phasenverschiebung zwischen dem von dem Generator gelieferten Signals und dem von dem Verstärker gelieferten Signal; und
- einen Komparatorschaltkreis (36) zum Vergleichen des Wertes der Phasenverschiebung mit einem Schwellenwert (42) und zum Steuern der Betätigungsmittel (10), wenn der Phasenverschiebungswert oberhalb des Schwellenwertes ist.
